# EUROPEAN PATENT APPLICATION

(11) **EP 4 332 541 A1**
(43) Date of publication of application: **06.03.2024**
(21) Application number: 22795569.7
(22) Date of filing: 12.04.2022
(51) Int. Cl.: G01N 1/02, G01N 1/28

(54) **FINE PARTICLE SAMPLING DEVICE AND FINE PARTICLE SAMPLING METHOD**

(30) Priority: 26.04.2021 JP 2021073918
(71) Applicant: Panasonic Intellectual Property Management Co., Ltd., Kadoma-shi, Osaka 571-0057 (JP)
(72) Inventor: NARIHATA Koki, Osaka 571-0057 (JP)
(74) Representative: Eisenführ Speiser
(86) International application number: PCT/JP2022/017562
(87) International publication number: WO 2022/230655

(57) **Abstract**

A fine-particle sampling device (10) includes a first electrode (22) having a shape of a tube and having a first opening located at a first end of the tube in an axial direction and a second opening located at a second end of the tube in the axial direction; a second electrode (24) extending in the axial direction and disposed in the inside of the first electrode to be spaced apart from an inner surface of the first electrode; a third electrode (25) extending in the axial direction and disposed in the inside of the first electrode to be spaced apart from the inner surface, the third electrode being thicker than the second electrode, the third electrode being at a position that differs from the position of the second electrode in the axial direction; a supplier (28) that supplies a liquid to the inside of the first electrode and causes the liquid to be stored at a portion of the inner surface in a direction around the axis of the first electrode; a voltage applicator (26) that applies a first voltage to a gap between the first electrode and the second electrode and a second voltage to a gap between the first electrode and the third electrode; a driver (32) that causes the first electrode to rotate around a rotational axis extending in the axial direction and passing through the inside of the first electrode; and a retriever (30) that retrieves the stored liquid.

## Description

### Technical Field

The present disclosure relates to a fine-particle sampling device that samples fine particles, and a fine-particle sampling method.

### Background Art

In the related art, there are known devices and methods in which a device that uses inertia of fine particles and a centrifugal force is used to sample the fine particles in a gas (refer to, for example, PTL 1, PTL 2, and PTL 3). PTL 1 discloses a method of catching microbes floating in air onto a membrane filter by sucking the air through the membrane filter. PTL 2 discloses an airborne bacteria sampler that causes air sucked through a suction portion to collide with a medium to thereby cause airborne bacteria in the air to adhere to the medium and to be collected. PTL 3 discloses a device that uses a centrifugal force generated by a whirl of sucked air to separate a collection target from the air and collect the collection target.

### Citation List

### Patent Literature

PTL 1: Japanese Unexamined Patent Application Publication No. 2008-161143
PTL 2: Japanese Unexamined Patent Application Publication No. 2009-11265
PTL 3: Japanese Unexamined Patent Application Publication No. 2012-52866

### Summary of Invention

### Technical Problem

In the aforementioned configurations in the related art, however, fine particles of aerosol or the like separated from sucked air accumulate in a dry state in most cases and require an additional step, such as extraction of the fine particles into a solution, for analysis. When fine particles to be sampled are organisms, it is not possible to collect the organisms while maintaining the activity thereof. Even when a purpose of collection is retrieving into a solution to solve these problems, it takes a long time due to a large amount of the solution to obtain a high concentration, and suction causes a great pressure loss and loud noise. In addition, collection performance thereof greatly depends on factors such as the shapes and sizes of devices, suction speed, the size of target aerosol, and the like, and there is an issue that it is not possible to perform collection efficiently.

When an electrostatic collection method is used, normally, it is possible by electrifying a larger amount of sampling-target fine particles by electric discharge to sample the fine particles efficiently. There is, however, an issue that active substances such as ozone is generated at the time of the electric discharge. Active substances oxidize sampling-target fine particles and may adversely affect inspections and the like of the fine particles after sampled.

### Solution to Problem

The present disclosure has been made in consideration of the aforementioned issues in the related art and provides a fine-particle sampling device and a fine-particle sampling method capable of sampling fine particles efficiently while suppressing generation of active substances.

A fine-particle sampling device according to one aspect of the present disclosure includes a first electrode that has a shape of a tube and has a first opening located at a first end of the tube in an axial direction and a second opening located at a second end of the tube in the axial direction; a second electrode that extends in the axial direction and that is disposed in an inside of the first electrode to be spaced apart from an inner surface of the first electrode; a third electrode that extends in the axial direction and that is disposed in the inside of the first electrode to be spaced apart from the inner surface, the third electrode being thicker than the second electrode, the third electrode being at a position that differs from a position of the second electrode in the axial direction; a supplier that supplies a liquid to the inside of the first electrode and causes the liquid to be stored at a portion of the inner surface in a direction around an axis of the first electrode; a voltage applicator that applies a first voltage to a gap between the first electrode and the second electrode and a second voltage to a gap between the first electrode and the third electrode; a driver that causes the first electrode to rotate around a rotational axis extending in the axial direction and passing through the inside of the first electrode; and a retriever that retrieves the liquid that is stored.

A fine-particle sampling method according to one aspect of the present disclosure is a fine-particle sampling method for a fine-particle sampling device, the fine-particle sampling device including a first electrode that has a shape of a tube and that has a first opening located at a first end of the tube in an axial direction and a second opening located at a second end of the tube in the axial direction, a second electrode that extends in the axial direction and that is disposed in an inside of the first electrode to be spaced apart from an inner surface of the first electrode, and a third electrode that extends in the axial direction and that is disposed in the inside of the first electrode to be spaced apart from the inner surface, the third electrode being thicker than the second electrode, the third electrode being at a position that differs from a position of the second electrode in the axial direction, the fine-particle sampling method including supplying a liquid to the inside of the first electrode and causing the liquid to be stored at a portion of the inner surface in a direction around an axis of the first electrode; applying a first voltage to a gap between the first electrode and the second electrode and a second voltage to a gap between the first electrode and the third electrode; causing the first electrode to rotate around a rotational axis that extends in the axial direction and that passes through the inside of the first electrode; and retrieving the liquid that is stored.

The fine-particle sampling device and the fine-particle sampling method according to one aspect of the present disclosure can sample fine particles efficiently while suppressing generation of active substances.

### Brief Description of Drawings

[Fig. 1] Fig. 1 is a perspective view illustrating an appearance of a fine-particle sampling device according to a first embodiment.
[Fig. 2] Fig. 2 is a side view illustrating an appearance of the fine-particle sampling device in Fig. 1.
[Fig. 3] Fig. 3 is a sectional view along line III-III in Fig. 1.
[Fig. 4] Fig. 4 is an end view along line IV-IV in Fig. 1.
[Fig. 5] Fig. 5 is a block diagram illustrating a configuration of the fine-particle sampling device in Fig. 1.
[Fig. 6] Fig. 6 is a flow chart illustrating one example of an operation of the fine-particle sampling device in Fig. 1.
[Fig. 7] Fig. 7 is a sectional view along line III-III in Fig. 1 and is an explanatory view for describing one example of an operation performed by the fine-particle sampling device in Fig. 1.
[Fig. 8] Fig. 8 is a table indicating test results of tests performed to confirm ozone generation amounts and dust collection efficiency with and without a covering member.
[Fig. 9] Fig. 9 is a sectional view of a fine-particle sampling device according to a second embodiment.
[Fig. 10] Fig. 10 is a sectional view of a fine-particle sampling device according to a third embodiment.

### Description of Embodiments

Hereinafter, embodiments of the present disclosure will be described with reference to the drawings.

A fine-particle sampling device and a fine-particle sampling method according to the present disclosure are, however, not intended to be limited to the embodiments described below and/or the configurations illustrated in the drawings, and include configurations equivalent thereto.

The embodiments described below each indicate comprehensive or specific examples. Numerical values, shapes, materials, components, arrangement positions and connection forms of the components, steps, the order of the steps, and the like described in the following embodiments are examples and not intended to limit the claims. The drawings are not necessarily illustrated exactly. In the drawings, substantially identical components are given identical signs, and duplicate description thereof may be omitted or simplified.

In the following description, terms such as parallel and perpendicular indicating relationships between components, terms such as cylindrical indicating shapes of components, and ranges of numerical values do not indicate only strict meanings but mean that substantially equivalent ranges, for example, differences of about several percent are also included.

In the following drawings, the X-axis and the Y-axis are axes that are orthogonal to each other on a horizontal plane. The Z-axis is an axis that is perpendicular to the horizontal plane. In the Z-axis, the positive direction indicates a vertically upward direction, and the negative direction indicates a vertically downward direction.

### (First Embodiment)

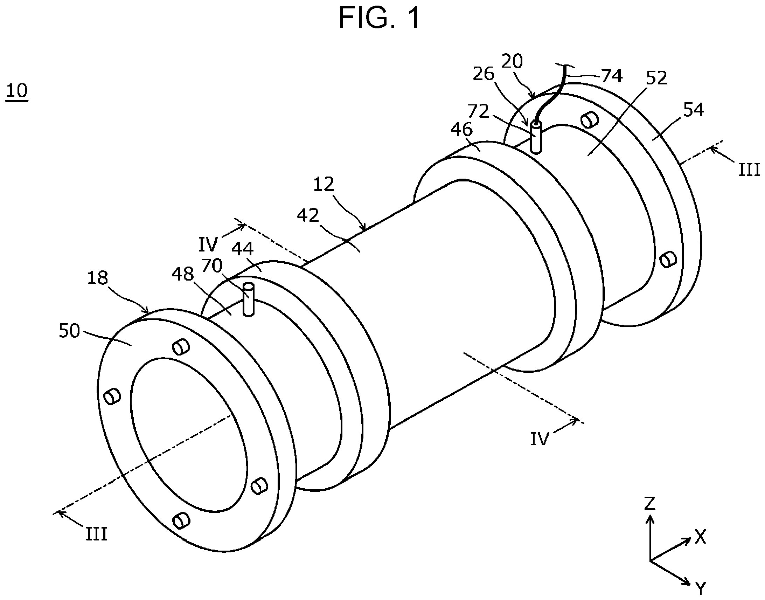

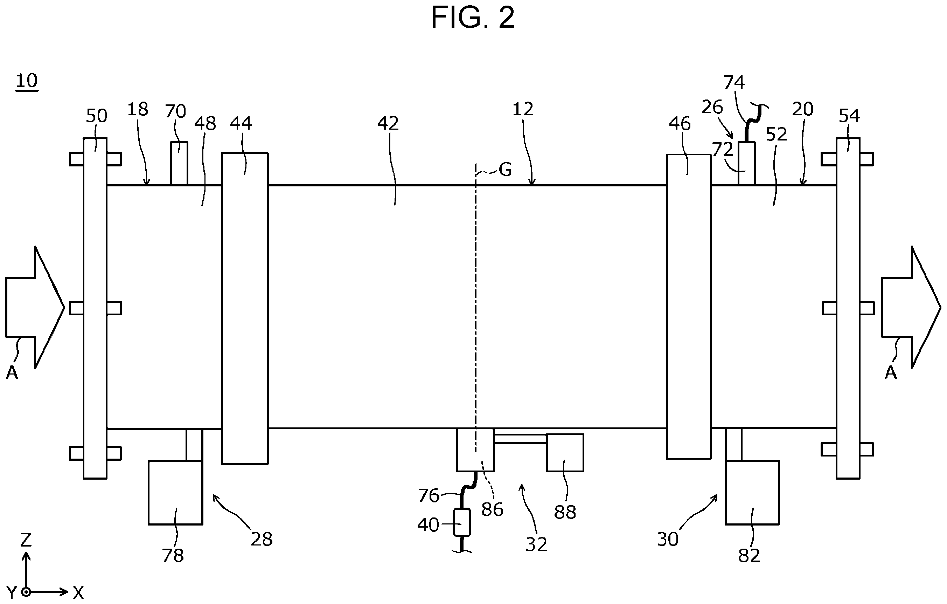

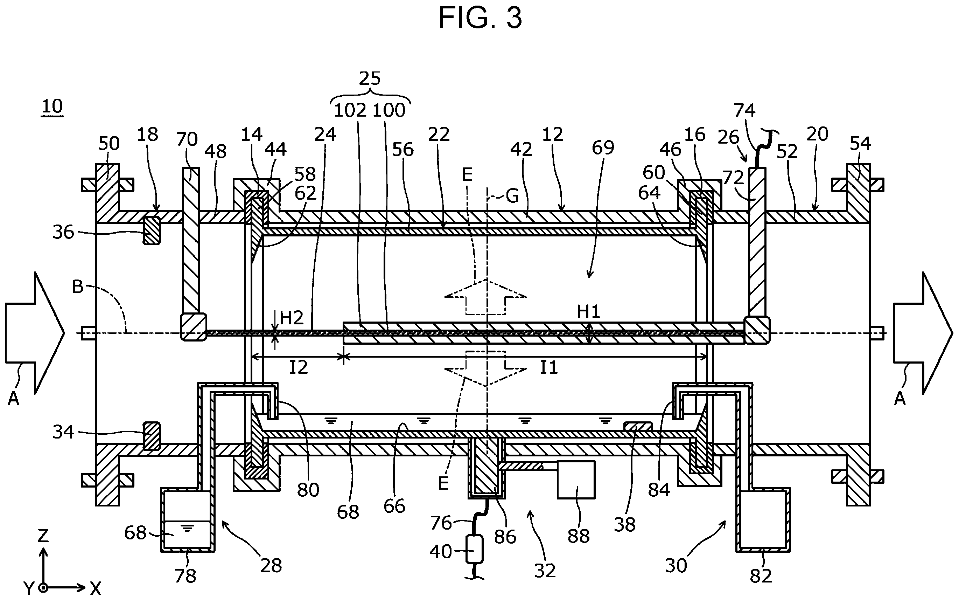

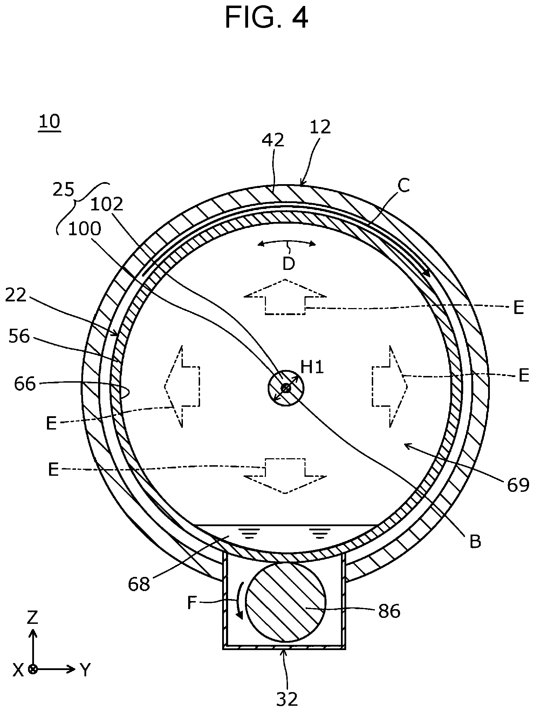

Fig. 1 is a perspective view illustrating an appearance of a fine-particle sampling device 10 according to a first embodiment. Fig. 2 is a side view illustrating an appearance of the fine-particle sampling device 10 in Fig. 1. Fig. 3 is a sectional view along line III-III in Fig. 1 and is an internal view of the fine-particle sampling device 10 in Fig. 1. Fig. 4 is an end view along line IV-IV in Fig. 1. In Fig. 1, illustration of an air velocity sensor 34 and the like are omitted. With reference to Fig. 1 to Fig. 4, the fine-particle sampling device 10 according to the first embodiment will be described.

As illustrated in Fig. 1 to Fig. 4, the fine-particle sampling device 10 is a device that samples fine particles into a liquid. Specifically, the fine-particle sampling device 10 is a device that collects fine particles in a gas into a liquid 68 (described later) to thereby sample the fine particles into the liquid. Examples of fine particles include fungi, bacteria, viruses, and aerosol. The fine-particle sampling device 10 includes a duct 12, a first bearing seal 14, a second bearing seal 16, a first flange member 18, a second flange member 20, a first electrode 22, a second electrode 24, a third electrode 25, a voltage applicator 26, a supplier 28, a retriever 30, a driver 32, the air velocity sensor 34, an in-gas concentration sensor 36, an in-liquid concentration sensor 38, and an ammeter 40.

The fine-particle sampling device 10 is constituted by the first electrode 22 that is rotatable and the second electrode 24 and the third electrode 25 that are disposed at a center portion of the first electrode 22, and the duct 12, the first flange member 18, and the second flange member 20 that surround the first electrode 22, the second electrode 24, and the third electrode 25. A gas, such as air, is caused to flow through the inside of the fine-particle sampling device 10 in a direction (the direction indicated by the arrows A in Fig. 2) passing through the fine-particle sampling device 10. A gas may be caused to flow through the inside of the fine-particle sampling device 10 by, for example, introducing air into the fine-particle sampling device 10 directly by a pump (not illustrated) or the like. For example, the fine-particle sampling device 10 may be installed at a device, for example, an air-conditioner, an air cleaner, a vent, or the like through which a gas, such as air, flows, and air may be introduced into the fine-particle sampling device 10 and processed. By thus mounting the fine-particle sampling device 10 on a device that generates a flow of a gas, the need to incorporate a pump or the like for generating a flow of a gas into the fine-particle sampling device 10 is eliminated, and a device that is small and silent and in which a pressure loss is small is easily achieved. Consequently, the fine-particle sampling device 10 can be installed and incorporated at various locations relatively without selection of locations. Hereinafter, components of the fine-particle sampling device 10 will be described.

The duct 12 has a tubular shape, and the first electrode 22 is rotatably supported inside the duct 12. The duct 12 includes a body 42, a first support 44, and a second support 46. The body 42, the first support 44, and the second support 46 have electrically insulating properties.

The body 42 has a cylindrical shape. One end portion of the body 42 in the axial direction thereof has an opening, and another end portion of the body 42 in the axial direction has an opening.

The first support 44 projects outward in the radial direction of the body 42 from the one end portion of the body 42 in the axial direction and is formed to be integral with the body 42. The first support 44 is recessed outward in the radial direction of the body 42 into a substantially U-shape (refer to Fig. 3). The first support 44 has an annular shape when viewed in the axial direction of the body 42. The first bearing seal 14 is disposed inside the first support 44. The first bearing seal 14 seals a gap between the first support 44 and a first outer flange 58 (described later) such that a gas does not leak through the gap between the first support 44 and the first outer flange 58. The first support 44 rotatably supports the first electrode 22 with the first bearing seal 14 interposed therebetween.

The second support 46 projects outward in the radial direction of the body 42 from the other end portion of the body 42 in the axial direction and is formed to be integral with the body 42. The second support 46 is recessed outward in the radial direction of the body 42 into a substantially U-shape (refer to Fig. 3). The second support 46 has an annular shape when viewed in the axial direction of the body 42. The second bearing seal 16 is disposed inside the second support 46. The second bearing seal 16 seals a gap between the second support 46 and a second outer flange 60 (described later) such that a gas does not leak through the gap between the second support 46 and the second outer flange 60. The second support 46 rotatably supports the first electrode 22 with the second bearing seal 16 interposed therebetween.

The first flange member 18 has a tubular shape and is connected to the duct 12. The first flange member 18 includes a body 48 and a flange 50.

The body 48 has a cylindrical shape. One end portion of the body 48 in the axial direction thereof has an opening, and another end portion of the body 48 in the axial direction has an opening. The flange 50 projects outward in the radial direction of the body 48 from the one end portion of the body 48 in the axial direction and is formed to be integral with the body 48. The flange 50 has an annular shape when viewed in the axial direction of the body 48. The other end portion of the body 48 in the axial direction is connected to one end portion of the duct 12 in the axial direction thereof.

The second flange member 20 has a tubular shape and is connected to the duct 12. The second flange member 20 includes a body 52 and a flange 54.

The body 52 has a cylindrical shape. One end portion of the body 52 in the axial direction thereof has an opening, and another end portion of the body 52 in the axial direction has an opening. The one end portion of the body 52 in the axial direction is connected to another end portion of the duct 12 in the axial direction. The flange 54 projects outward in the radial direction of the body 52 from the other end portion of the body 52 in the axial direction and is formed to be integral with the body 52. The flange 54 has an annular shape when viewed in the axial direction of the body 52.

The first electrode 22 has a tubular shape. One end portion of the first electrode 22 in the axial direction thereof has an opening, and another end portion of the first electrode 22 in the axial direction has an opening. The first electrode 22 is connected to the ground through a second electric wire 76 (described later) and the like. The first electrode 22 includes a body 56, the first outer flange 58, the second outer flange 60, a first inner flange 62, and a second inner flange 64. The body 56, the first outer flange 58, the second outer flange 60, the first inner flange 62, and the second inner flange 64 are made of, for example, stainless steel, such as SUS.

The body 56 has a cylindrical shape. One end portion of the body 56 in the axial direction thereof has an opening, and another end portion of the body 56 in the axial direction has an opening. The axial direction of the body 56 is a direction (X-axis direction) in which an axis B of the body 56 extends. The body 56 includes, on the outer peripheral surface of the body 56, external teeth (not illustrated) that mesh with external teeth (not illustrated) of a gear 86 (described later). A hydrophilic treatment has been performed on an inner surface 66 of the body 56. The hydrophilic treatment is a treatment that processes the inner surface 66 to have fine roughness. The hydrophilic treatment is performed by, for example, a plasma treatment. For example, the hydrophilic treatment is performed by an alkali treatment with potassium hydroxide (KOH). A fixation suppressing member that suppress fixation of fine particles is attached to the inner surface 66 of the body 56. The fixation suppressing member is, for example, a blocking agent, such as skimmed milk, BSA (bovine serum albumin), PEG (polyethylene glycol), or the like. The axis of the body 56 coincides with the axis of the first electrode 22.

The first outer flange 58 projects outward in the radial direction of the body 56 from the one end portion of the body 56 in the axial direction and is formed to be integral with the body 56. The first outer flange 58 is annular around the axis B of the body 56. In other words, the first outer flange 58 has an annular shape when viewed in the axial direction of the body 56. The first outer flange 58 is disposed inside the first bearing seal 14.

The second outer flange 60 projects outward in the radial direction of the body 56 from the other end portion of the body 56 in the axial direction and is formed to be integral with the body 56. The second outer flange 60 is annular around the axis B of the body 56. In other words, the second outer flange 60 has an annular shape when viewed in the axial direction of the body 56. The second outer flange 60 is disposed inside the second bearing seal 16.

The first inner flange 62 projects inward in the radial direction of the body 56 from the one end portion of the body 56 in the axial direction and is formed to be integral with the body 56. The first inner flange 62 is annular around the axis B of the body 56. In other words, the first inner flange 62 has an annular shape when viewed in the axial direction of the body 56.

The second inner flange 64 projects inward in the radial direction of the body 56 from the other end portion of the body 56 in the axial direction and is formed to be integral with the body 56. The second inner flange 64 is annular around the axis B of the body 56. In other words, the second inner flange 64 has an annular shape when viewed in the axial direction of the body 56.

The first electrode 22 is installed in an orientation in which the axis B of the body 56 is parallel to the horizontal direction. The first electrode 22 is supported to be rotatable around the axis B of the body 56 (refer to the arrow C in Fig. 4). In other words, the first electrode 22 is supported to be rotatable on its axis.

The first electrode 22 stores, on the inner surface 66 of the body 56, the liquid 68. Specifically, the first electrode 22 stores the liquid 68 at a portion of the inner surface 66 in a direction (refer to the arrows D in Fig. 4) around the axis B of the body 56. The stored liquid 68 is located below the axis B of the body 56. In the first electrode 22, the liquid 68 is stored at the portion of the inner surface 66 to extend in the axial direction of the body 56. The first inner flange 62 holds the liquid 68 such that the liquid 68 stored at a portion of the inner surface 66 of the body 56 does not spill out from the one end portion of the body 56 in the axial direction. The second inner flange 64 holds the liquid 68 such that the liquid 68 stored at a portion of the inner surface 66 of the body 56 does not spill out from the other end portion of the body 56 in the axial direction. As described above, the first electrode 22 has a structure that can store the liquid 68 at a portion of the inner surface 66, and the first electrode 22 stores the liquid 68 at a portion of the inner surface 66 of the body 56 such that the liquid 68 does not flow out to the outside of the body 56. In the body 56, a space 69 extending through the body 56 in the axial direction is formed above the stored liquid 68.

The second electrode 24 has a linear shape and extends in the axial direction of the body 56 of the first electrode 22. The second electrode 24 passes through radially inside of the one end portion of the body 56 of the first electrode 22 in the axial direction and is located inside the body 56. The second electrode 24 projects toward a side opposite to the other end portion, in other words, outward from the one end portion of the body 56 in the axial direction of the body 56. The second electrode 24 extends from the side opposite to the other end portion with respect to the one end portion of the first electrode 22 to the one end portion side of the first electrode 22 with respect to the center G of the first electrode 22 in the axial direction in the first electrode 22. The center G is, for example, a center between the one end portion and the other end portion of the body 56 in the axial direction. In a direction orthogonal to the axial direction of the body 56 of the first electrode 22, the second electrode 24 faces the first inner flange 62.

The second electrode 24 is spaced apart from the inner surface 66 of the body 56 of the first electrode 22 and disposed in the vicinity of the center of the first electrode 22. The second electrode 24 is disposed in the space 69. In this embodiment, the second electrode 24 is installed in an orientation in which the axis of the second electrode 24 coincides with the axis B of the body 56 of the first electrode 22. The second electrode 24 is made of, for example, tungsten or the like.

In the first electrode 22, there are the one end portion side of the first electrode 22 with respect to the center G in the axial direction of the first electrode 22 and the other end portion side of the first electrode 22 with respect to the center G, and the second electrode 24 is disposed on the one end portion side with respect to the center G. In other words, the second electrode 24 is not disposed on the other end portion side of the center G in the first electrode 22.

The arrangement of the second electrode 24 may be interpreted as follows. The first electrode 22 has a first opening located at a first end in the axial direction of the first electrode 22 and a second opening located at a second end in the axial direction of the first electrode 22. In the first electrode 22, the second electrode 24 (i) is disposed between the first opening and a first plane, (ii) is not disposed between the first plane and the second opening, and (iii) is in direct contact at the first plane with the third electrode 25. A distance between the first plane and the first opening is smaller than a distance between the first plane and the second opening. The first plane is perpendicular to the axial direction of the first electrode 22.

The third electrode 25 extends in the axial direction of the body 56 of the first electrode 22. The third electrode 25 includes a core member 100 and a covering member 102 that covers the core member 100. The core member 100 has a linear shape and extends in the axial direction of the body 56 of the first electrode 22. The covering member 102 has a tubular shape and extends in the axial direction of the body 56 of the first electrode 22. The core member 100 and the covering member 102 have electrical conductivity.

The core member 100 is disposed inside the covering member 102, and the covering member 102 covers the outer side of the core member 100. For example, the covering member 102 may cover the core member 100 in a state of being in close contact with the core member 100 and may cover the core member 100 in a state in which a slight gap is present between the covering member 102 and the core member 100. It is sufficient for the covering member 102 to cover the core member 100 in a state in which at least part of the covering member 102 is in contact with the core member 100 so as to be electrically connected with the core member 100.

The third electrode 25 is disposed in the first electrode 22 to be spaced apart from the inner surface 66 of the body 56 of the first electrode 22. Specifically, the core member 100 and the covering member 102 are spaced apart from the inner surface 66 of the body 56 of the first electrode 22 and disposed in the vicinity of the center of the first electrode 22. The core member 100 and the covering member 102 are disposed in the space 69. In this embodiment, the core member 100 is installed in an orientation in which the axis of the core member 100 coincides with the axis B of the body 56 of the first electrode 22, and the covering member 102 is installed in an orientation in which the axis of the covering member 102 coincides with the axis B of the body 56 of the first electrode 22.

The third electrode 25 is thicker than the second electrode 24. Here, thickness is a dimension in a direction orthogonal to an extension direction. In other words, the thickness of the third electrode 25 is a dimension H1 of the third electrode 25 in the direction orthogonal to the axial direction of the body 56 of the first electrode 22, and the thickness of the second electrode 24 is a dimension H2 of the second electrode 24 in the direction orthogonal to the axial direction of the body 56 of the first electrode 22. In the direction orthogonal to the axial direction of the body 56 of the first electrode 22, the dimension H1 of the third electrode 25 is larger than the dimension H2 of the second electrode 24.

When, for example, the external shape of the third electrode 25 at a cross-section orthogonal to the extension direction is circular, the diameter of the external shape is considered as the thickness of the third electrode 25. When, for example, the external shape of the third electrode 25 at a cross-section orthogonal to the extension direction is not circular, the dimension of a thickest portion of the external shape may be considered as the thickness of the third electrode 25, the dimension of a thinnest portion of the external shape may be considered as the thickness of the third electrode 25, or an average value of the dimension of the thickest portion of the external shape and the dimension of the thinnest portion of the external shape may be considered as the thickness of the third electrode 25. When the thickness of the third electrode 25 varies depending on positions in the extension direction, the dimension of a thickest portion may be considered as the thickness of the third electrode 25, the dimension of a thinnest portion may be considered as the thickness of the third electrode 25, or an average value of the dimension of the thickest portion and the dimension of the thinnest portion may be considered as the thickness of the third electrode 25. The same applies to the second electrode 24. When the external shape of the second electrode 24 at a cross-section orthogonal to the extension direction is circular, the diameter of the external shape is considered as the thickness of the second electrode 24. When, for example, the external shape of the second electrode 24 at a cross-section orthogonal to the extension direction is not circular, the dimension of a thickest portion of the external shape may be considered as the thickness of the second electrode 24, the dimension of a thinnest portion of the external shape may be considered as the thickness of the second electrode 24, or an average value of the dimension of the thickest portion of the external shape and the dimension of the thinnest portion of the external shape may be considered as the thickness of the second electrode 24. When the thickness of the second electrode 24 varies depending on positions in the extension direction, the dimension of a thickest portion may be considered as the thickness of the second electrode 24, the dimension of a thinnest portion may be considered as the thickness of the second electrode 24, or an average value of the dimension of the thickest portion and the dimension of the thinnest portion may be considered as the thickness of the second electrode 24.

In this embodiment, the core member 100 has a thickness substantially the same as the thickness of the second electrode 24, and the covering member 102 covering the core member 100 makes the third electrode 25 thicker than the second electrode 24. In other words, in this embodiment, the covering member 102 is a member for making the third electrode 25 thicker than the second electrode 24.

For example, the thickness of the second electrode 24 is a thickness with which electric discharge such as corona discharge occurs when a voltage is applied to a gap between the first electrode 22 and the second electrode 24. Specifically, for example, the thickness of the second electrode 24 is a thickness with which, when a voltage is applied to the gap between the first electrode 22 and the second electrode 24, electric discharge such as corona discharge easily occurs.

The thickness of the third electrode 25 is, for example, a thickness with which electric discharge such as corona discharge does not occur easily when a voltage is applied to a gap between the first electrode 22 and the third electrode 25. Specifically, for example, the thickness of the third electrode 25 is a thickness with which, when a voltage is applied to the gap between the first electrode 22 and the third electrode 25, electric discharge such as corona discharge does not occur.

The third electrode 25 is disposed at a position that differs from the position of the second electrode 24 in the axial direction of the body 56 of the first electrode 22. In this embodiment, the third electrode 25 is disposed on the other end portion side of the first electrode 22 with respect to the second electrode 24 in the axial direction of the body 56 of the first electrode 22. In other words, in this embodiment, the second electrode 24 is disposed on the one end portion side of the first electrode 22 with respect to the third electrode 25 in the axial direction of the body 56 of the first electrode 22.

Specifically, the core member 100 and the covering member 102 are disposed at positions that differ from the position of the second electrode 24 in the axial direction of the body 56 of the first electrode 22. When viewed from the one end portion side in the axial direction of the body 56 of the first electrode 22, the second electrode 24 is located on the nearer side than the core member 100 and the covering member 102, and the core member 100 and the covering member 102 are located on the farther side than the second electrode 24. Therefore, when a gas flows into the first electrode 22 from the one end portion, the gas passes between the covering member 102 and the first electrode 22 after passing between the second electrode 24 and the first electrode 22, and the gas is then discharged from the other end portion of the first electrode 22 to the outside of the first electrode 22.

The third electrode 25 is disposed beside the second electrode 24 in the axial direction of the body 56 of the first electrode 22. Specifically, the core member 100 and the covering member 102 are disposed beside the second electrode 24 in the axial direction of the body 56 of the first electrode 22. When viewed in the axial direction of the body 56 of the first electrode 22, the core member 100 and the second electrode 24 overlap each other, and the core member 100 is beside the second electrode 24 in the axial direction of the body 56 of the first electrode 22. When viewed in the axial direction of the body 56 of the first electrode 22, at least part of the second electrode 24 is located inside the external shape of the covering member 102, and the covering member 102 is beside the second electrode 24 in the axial direction of the body 56 of the first electrode 22.

In the first electrode 22, the third electrode 25 is longer than the second electrode 24. In other words, the length of the third electrode 25 in the first electrode 22 is longer than the length of the second electrode 24 in the first electrode 22. Here, length is a dimension in the extension direction. In other words, the length of the third electrode 25 in the first electrode 22 is a dimension I1 of a portion of the third electrode 25 located in the first electrode 22 in the axial direction of the body 56 of the first electrode 22. The length of the second electrode 24 in the first electrode 22 is a dimension I2 of a portion of the second electrode 24 located in the first electrode 22 in the axial direction of the body 56 of the first electrode 22. The dimension I1 of the portion of the third electrode 25 located in the first electrode 22 is larger than the dimension I2 of the portion of the second electrode 24 located in the first electrode 22. Specifically, the dimension I1 of a portion of the core member 100 located in the first electrode 22 is larger than the dimension I2 of the portion of the second electrode 24 located in the first electrode 22. The dimension I1 of a portion of the covering member 102 located in the first electrode 22 is larger than the dimension I2 of the portion of the second electrode 24 located in the first electrode 22.

The third electrode 25 extends from the one end portion side of the first electrode 22 with respect to the center G of the first electrode 22 to the side opposite to the one end portion side with respect to the other end portion of the first electrode 22. Specifically, the core member 100 and the covering member 102 extend from the one end portion side of the body 56 of the first electrode 22 with respect to the center G of the first electrode 22 to the side opposite to the one end portion side with respect to the other end portion of the body 56 of the first electrode 22. In other words, the core member 100 and the covering member 102 pass through radially inside of the other end portion in the axial direction of the body 56 of the first electrode 22 and project toward a side opposite to the one end portion, that is, outward from the other end portion of the body 56. The covering member 102 faces the second inner flange 64 in the direction orthogonal to the axial direction of the body 56 of the first electrode 22.

The arrangement of the third electrode 25 may be interpreted as follows. The first electrode 22 has a first opening located at a first end in the axial direction of the first electrode 22 and a second opening located at a second end in the axial direction of the first electrode 22. In the first electrode 22, the third electrode 25 (i) is not disposed between the first opening and a first plane, (ii) is disposed between the first plane and the second opening, and (iii) is in direct contact at the first plane with the second electrode 24. A distance between the first plane and the first opening is smaller than a distance between the first plane and the second opening. The first plane is perpendicular to the axial direction of the first electrode 22.

At least part of the third electrode 25 is formed to be integral with the second electrode 24. Specifically, the core member 100 is formed to be integral with the second electrode 24 such that the second electrode 24 and the core member 100 are continuous in the axial direction of the body 56 of the first electrode 22. The covering member 102 is separate from the core member 100 and the second electrode 24 and is not formed to be integral with the second electrode 24.

In this embodiment, the second electrode 24 and the core member 100 are made of a single electrically conductive member having electrical conductivity. A portion of the electrically conductive member covered by the covering member 102 is the core member 100, and an exposed portion of the electrically conductive member not covered by the covering member 102 is the second electrode 24. For example, the core member 100 is made of tungsten or the like to be integral with the second electrode 24, and the covering member 102 is made of stainless steel, such as SUS.

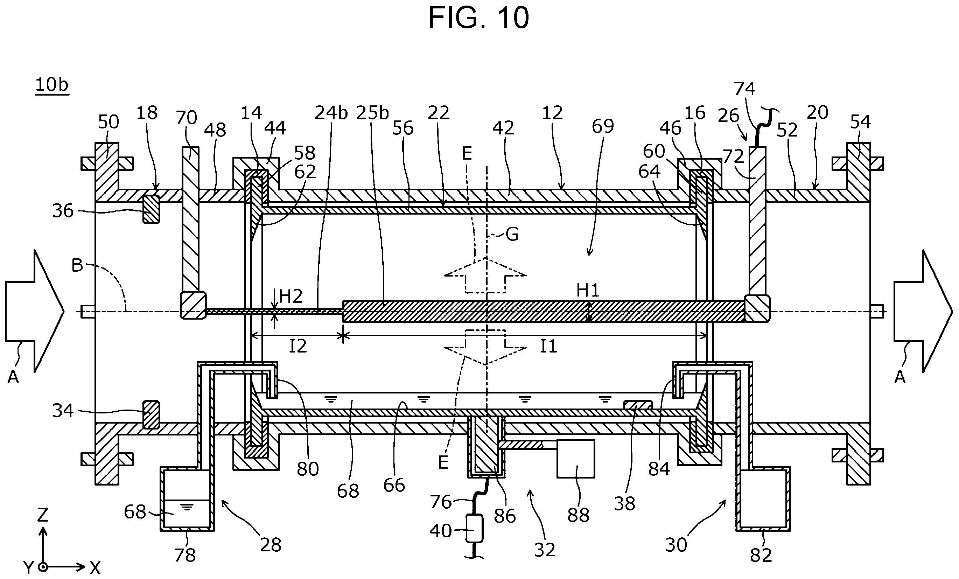

The second electrode 24 and the third electrode 25 may be realized by, for example, a structure in which part of a linear electrode is further covered by an electrically conductive material. At this time, a covered position of the electrode may be present on the rear side (far side) in a direction in which a fluid flows with respect to an exposed position where the electrode is not covered. Consequently, a local electric field formed by a voltage difference becomes large between a portion of the electrode on the front side (near side) and the first inner flange 62 and the like, and electric discharge occurs therebetween. By this electric discharge, target particles that are fine particles to be sampled are electrically charged, and at the same time, the target particles can be oxidized by a product such as produced ozone or the like. Meanwhile, concentration of the electric field becomes small at the covered portion of the electrode on the rear side, and therefore, electric discharge does not occur. However, since the distance between the portion and the first electrode 22 decreases, an electric field between these electrodes increases and target particles passing between these electrodes are collected by a stronger force. Consequently, it is possible by not electrifying particles unnecessarily to increase the dust collection amount while suppressing generation of active substances such as ozone. The covered position and the covered length can be changed in accordance with dust collection environment and/or target particles and the like by adjusting the covered position and the covered length by, for example, sliding the covering member 102. When changing of the covered position and the like are not necessary, the structure of the second electrode 24 and the third electrode 25 may have a shape that is naturally thin on the front side and thick on the rear side (refer to Fig. 10).

The voltage applicator 26 applies a voltage to each of the gap between the first electrode 22 and the second electrode 24 and the gap between the first electrode 22 and the third electrode 25. Specifically, the voltage applicator 26 applies a voltage to the gap between the first electrode 22 and the second electrode 24 to form an electric field between the first electrode 22 and the second electrode 24. The voltage applicator 26 applies a voltage to the gap between the first electrode 22 and the third electrode 25 to form an electric field between the first electrode 22 and the third electrode 25. The voltage applicator 26 includes a first support body 70, a second support body 72, a first electric wire 74, and the second electric wire 76.

The first support body 70 is fixed to the first flange member 18 and located inside the first flange member 18. The first support body 70 is connected to one end portion of the second electrode 24 in the axial direction and supports the second electrode 24. The second support body 72 is fixed to the second flange member 20 and located inside the second flange member 20. The second support body 72 is connected to another end portion of the third electrode 25 in the axial direction and supports the third electrode 25. The first support body 70 and the second support body 72 have electrical conductivity and are electrically connected to the second electrode 24 and the third electrode 25. The first electric wire 74 is electrically connected through the second support body 72 to the second electrode 24 and the third electrode 25. The second electric wire 76 is electrically connected through the gear 86 and the like to the first electrode 22.

The voltage applicator 26 is capable of causing electricity having an optional magnitude and an optional waveform to flow, through the first electric wire 74 and the second electric wire 76, to the first electrode 22 and to the second electrode 24 and the third electrode 25 that are installed in the vicinity of the center of the first electrode 22. The fine-particle sampling device 10 thereby performs electrical dust collection of fine particles. The structure of each of the second electrode 24 and the core member 100 does not necessarily have a liner shape and may have a plate-like shape, a needle-like shape, or the like. The structures and the installation locations of the second electrode 24 and the core member 100 are not limited as long as the second electrode 24 and the core member 100 are capable of forming unequal electric fields. The voltage applicator 26 is realized by, for example, a power supply circuit or the like including a converter and the like. The voltage applicator 26 applies, for example, a direct-current voltage of 6 [kV].

For example, the voltage applicator 26 applies a voltage to each of the gap between the first electrode 22 and the second electrode 24 and the gap between the first electrode 22 and the third electrode 25 so as to cause potential to be higher on the side of the second electrode 24 than on the side of the first electrode 22 and cause potential to be higher on the side of the third electrode 25 than on the side of the first electrode 22. Consequently, in the space 69, an electric field is generated in a direction from the second electrode 24 toward the first electrode 22 and an electric field is generated in a direction from the third electrode 25 toward the first electrode 22 (refer to the arrows E in Fig. 3 and the arrows E in Fig. 4).

The supplier 28 supplies the liquid 68 to the inside of the first electrode 22 and causes the liquid 68 to be stored at a portion of the inner surface 66 in a direction around the axis B of the first electrode 22. In other words, to cause the liquid 68 to be stored at a portion of the inner surface 66 in the direction around the axis B of the first electrode 22, the supplier 28 supplies the liquid 68 to the inside of the first electrode 22. As described above, the liquid 68 supplied by the supplier 28 is stored on the inner surface 66 of the body 56 of the first electrode 22. The supplier 28 includes a tank 78 and an injector 80.

The tank 78 holds the liquid 68 that is to be supplied to the inside of the first electrode 22. The liquid 68 held in the tank 78 is discharged through the injector 80 by a pump (not illustrated) or the like and is supplied to the inside of the body 56 of the first electrode 22. As described above, the tank 78 for previously storing the liquid 68, such as a collecting liquid for sensing of influenza viruses, is installed, and the liquid 68 is supplied through the injector 80 to the inside of the first electrode 22.

In this embodiment, the supplier 28 supplies, as the liquid 68, a liquid for analysis of fine particles. The liquid for analysis of fine particles means, for example, a liquid to be used in analysis, a liquid that maintains, for analysis, activity of a target substance included in fine particles, a liquid that adds, for analysis, a mark or the like on a target substance included in fine particles, a liquid that protects, for analysis, a target substance included in fine particles, or an optional combination of these liquids. The liquid 68 may be a liquid that is intended for dissolution and storage. Examples of the liquid intended for dissolution and storage include a normal saline solution, a PBS buffer solution, an EDTA buffer solution, and a bicarbonate buffer solution. The liquid 68 may be a liquid that contains a substance that specifically binds to viruses and generates magnetism and/or fluorescent light. The liquid 68 is not necessarily a liquid for analysis of fine particles and may be, for example, pure water.

The target substance is not limited to influenza viruses. The target substance may be, for example, other viruses or organisms (for example, bacteria) other than viruses. The target substance is not necessarily organisms and may be an environmental pollutant, an allergen, or the like.

The retriever 30 retrieves the liquid 68 stored at a portion of the inner surface 66 in the direction around the axis B of the first electrode 22. The retriever 30 includes a tank 82 and an extractor 84. The liquid 68 stored at a portion of the inner surface 66 in the direction around the axis B of the first electrode 22 is sucked by a pump (not illustrated) or the like through the extractor 84 and is held and retrieved in the tank 82. As described above, the liquid 68, such as a collecting liquid, in which fine particles are accumulated is sucked through the extractor 84 and is held in the tank 82.

The driver 32 causes the first electrode 22 to rotate around a rotational axis extending in the axial direction of the body 56 of the first electrode 22 and passing through the inside of the first electrode 22. In this embodiment, the rotational axis coincides with the axis B of the body 56. In other words, in this embodiment, the driver 32 causes the first electrode 22 to rotate around the axis B of the body 56 of the first electrode 22. The driver 32 includes the gear 86 and a motor 88 for rotating the gear 86. The gear 86 has external teeth (not illustrated) that mesh with external teeth (not illustrated) of the first electrode 22. By the motor 88 rotating (refer to the arrow F in Fig. 4) the gear 86, the first electrode 22 rotates (refer to the arrow C in Fig. 4) around the axis B of the body 56. As described above, the first electrode 22 is rotated by the gear 86 that is driven by the motor 88.

The air velocity sensor 34 is installed on the inner surface of the body 48 of the first flange member 18 and measures the air velocity of a gas that (is intended to) passes through the inside of the first electrode 22. A gas outside the fine-particle sampling device 10 passes through the inside of the body 56 of the first electrode 22 by passing through the inside of the first flange member 18 and is discharged to the outside of the fine-particle sampling device 10 by passing through the inside of the second flange member 20 (refer to the arrows A in Fig. 2 and the arrows A in Fig. 3). The air velocity sensor 34 measures the air velocity of the gas (that is, the gas before passing through the inside of the first electrode 22) that is intended to pass through the inside of the first electrode 22 as described above.

The gas outside the fine-particle sampling device 10 may pass through the inside of the body 56 of the first electrode 22 by passing through the inside of the second flange member 20 and be discharged to the outside of the fine-particle sampling device 10 from the first flange member 18. In this case, the air velocity sensor 34 is capable of measuring the air velocity of the gas (that is, the gas after passing through the inside of the first electrode 22) that passes through the inside of the first electrode 22.

A controller 90 receives the air velocity measured by the air velocity sensor 34. The controller 90 may determine that the air velocity is the air velocity of the gas inside the first electrode 22.

The in-gas concentration sensor 36 is disposed on the inner surface of the body 48 of the first flange member 18 and measures the concentration of fine particles in a gas before or after passing through the inside of the first electrode 22 as described above. The in-gas concentration sensor 36 is, for example, an optical sensor. The controller 90 receives the concentration of fine particles measured by the in-gas concentration sensor 36. The controller 90 may determine that the concentration is the concentration of fine particles in the gas inside the first electrode 22.

The in-liquid concentration sensor 38 is disposed in the liquid 68 stored at a portion of the inner surface 66 in the direction around the axis B of the first electrode 22 and measures the concentration of fine particles in the liquid 68. The in-liquid concentration sensor 38 is, for example, an optical sensor.

The ammeter 40 is connected to the second electric wire 76 and measures a first electric current value of a first electric current that flows between the first electrode 22 and the second electrode 24, a second electric current value of a second electric current that flows between the first electrode 22 and the third electrode 25, or a third electric current value based on the first electric current and the second electric current. The ammeter 40 is disposed at a location at which the ammeter 40 is at least capable of measuring the first electric current value of the first electric current, the second electric current value of the second electric current, or the third electric current value based on the first electric current and the second electric current.

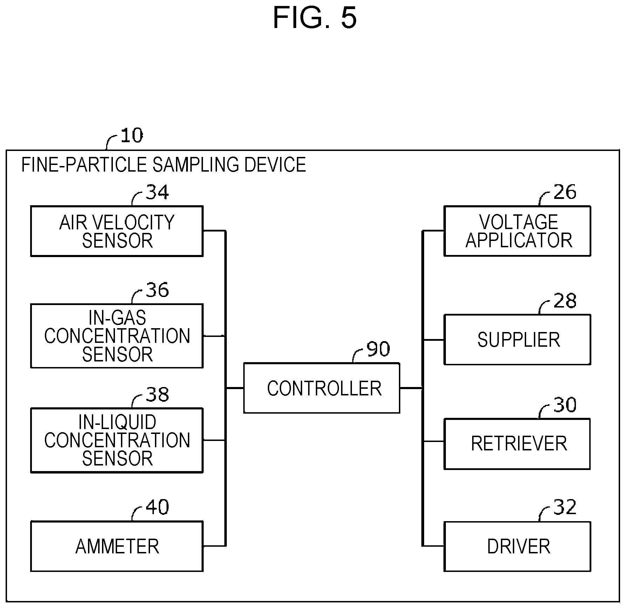

Fig. 5 is a block diagram illustrating a functional configuration of the fine-particle sampling device 10. With reference to Fig. 5, the functional configuration of the fine-particle sampling device 10 will be described.

As illustrated in Fig. 5, the fine-particle sampling device 10 further includes the controller 90.

The controller 90 is electrically connected to the air velocity sensor 34, the in-gas concentration sensor 36, the in-liquid concentration sensor 38, the ammeter 40, the voltage applicator 26, the supplier 28, the retriever 30, and the driver 32. The controller 90 controls the voltage applicator 26, the supplier 28, the retriever 30, and the driver 32 on the basis of measurement results obtained by the air velocity sensor 34, the in-gas concentration sensor 36, the in-liquid concentration sensor 38, and the ammeter 40. The controller 90 is realized by, for example, a microcomputer and may be realized by a processor or a dedicated circuit.

On the basis of a measurement result obtained by the air velocity sensor 34, the controller 90 calculates the flow rate of the gas that passes through the inside of the body 56 of the first electrode 22, and outputs the flow rate. For example, the controller 90 calculates the flow rate by using the air velocity of the gas that passes through the inside of the body 56 of the first electrode 22 and the cross-sectional area of a passage through which the gas passes. The controller 90 outputs the calculated flow rate to another device (not illustrated) or the like. Consequently, it is possible by using the flow rate calculated by the controller 90 to perform analysis and the like of fine particles.

The controller 90 controls the voltage applicator 26 and the driver 32 on the basis of a measurement result obtained by the in-gas concentration sensor 36. Specifically, when the concentration of fine particles in the gas is higher than a predetermined concentration, the controller 90 causes the voltage applicator 26 to apply a voltage to the gap between the first electrode 22 and the second electrode 24 and apply a voltage to the gap between the first electrode 22 and the third electrode 25. When the concentration of the fine particles in the gas is higher than a predetermined concentration, the controller 90 causes the driver 32 to rotate the first electrode 22.

The controller 90 controls the voltage applicator 26 on the basis of a measurement result obtained by the in-liquid concentration sensor 38. Specifically, when the concentration of fine particles in the stored liquid 68 is higher than a predetermined concentration, the controller 90 causes the voltage applicator 26 to stop application of a voltage to the gap between the first electrode 22 and the second electrode 24 and causes the voltage applicator 26 to stop application of a voltage to the gap between the first electrode 22 and the third electrode 25. For example, the controller 90 may cause, when the concentration of fine particles in the stored liquid 68 is higher than a predetermined concentration, the driver 32 to stop rotation of the first electrode 22. For example, the controller 90 may cause, when the concentration of fine particles in the stored liquid 68 is higher than a predetermined concentration, the retriever 30 to retrieve the stored liquid 68.

The controller 90 controls the supplier 28 on the basis of a measurement result obtained by the ammeter 40. For example, when the liquid amount of the stored liquid 68 decreases, resistance between the first electrode 22 and the second electrode 24, and the first electrode 22 and the third electrode 25 decrease. Consequently, the value of the electric current that flows between the first electrode 22 and the second electrode 24 and the value of the electric current that flows between the first electrode 22 and the third electrode 25 increase. Thus, when an electric current value measured by the ammeter 40 is larger than a predetermined value, the controller 90 causes the supplier 28 to supply the liquid 68 to the inside of the body 56 of the first electrode 22 to refill the inside of the body 56 of the first electrode 22 with the liquid 68. For example, when the first electric current value of the first electric current flowing between the first electrode 22 and the second electrode 24 is larger than a predetermined value, when the second electric current value of the second electric current flowing between the first electrode 22 and the third electrode 25 is larger than a predetermined value, or when the third electric current value based on the first electric current and the second electric current is larger than a predetermined value, the controller 90 causes the supplier 28 to refill the inside of the body 56 of the first electrode 22 with the liquid 68.

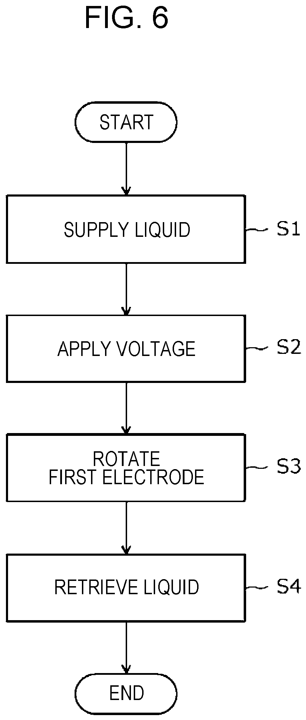

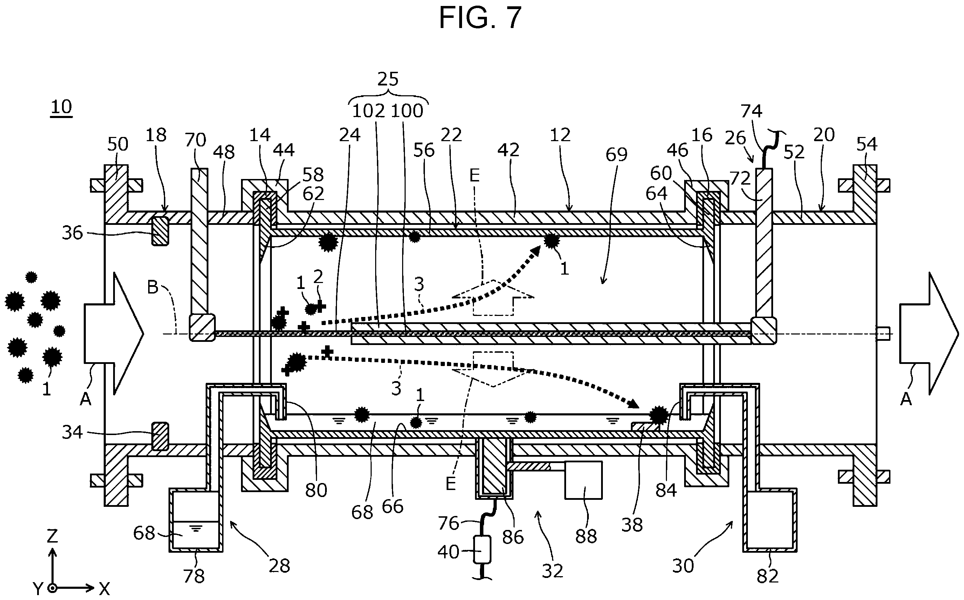

Next, an operation of the fine-particle sampling device 10 that is configured as described above will be described. Fig. 6 is a flowchart illustrating one example of the operation of the fine-particle sampling device 10. Fig. 7 is an explanatory view for describing one example of the operation of the fine-particle sampling device 10 and illustrates movement of viruses inside the fine-particle sampling device 10 during a period until the viruses are actually retrieved. With reference to Fig. 6 and Fig. 7, one example, including the flow of collection of influenza viruses 1, collection of the influenza viruses 1 into the liquid, and retrieving of the liquid 68, of the operation of the fine-particle sampling device 10 in the present embodiment will be described. Here, collection into the liquid is performed by the fine-particle sampling device 10 for the purpose of retrieving, as a liquid sample that can be analyzed by a sensor or the like, the influenza viruses 1, which are considered to occur aerial infection.

As illustrated in Fig. 6, first, the supplier 28 supplies the liquid 68 to the inside of the first electrode 22 to store the liquid 68 at a portion of the inner surface 66 in the direction around the axis B of the first electrode 22 (supplying step) (step S1). For example, the controller 90 receives an instruction from a user via an operation button (not illustrated), and the controller 90 causes the supplier 28 to supply the liquid 68 to the inside of the body 56 of the first electrode 22. The controller 90 may cause the supplier 28 to supply the liquid 68 to the inside of the body 56 of the first electrode 22, for example, on the basis of a measurement result obtained by the in-gas concentration sensor 36.

As illustrated in Fig. 7, the liquid 68 is supplied to the inside of the body 56 of the first electrode 22, and the liquid 68 is stored at a portion of the inner surface 66 in the direction around the axis B of the body 56 of the first electrode 22.

Referring back to Fig. 6, next, the voltage applicator 26 applies a voltage to each of the gap between the first electrode 22 and the second electrode 24 and the gap between the first electrode 22 and the third electrode 25 (voltage application step) (step S2). For example, on the basis of a measurement result obtained by the in-gas concentration sensor 36, the controller 90 causes the voltage applicator 26 to apply a voltage to the gap between the first electrode 22 and the second electrode 24 and apply a voltage to the gap between the first electrode 22 and the third electrode 25. For example, the controller 90 may receive an instruction from a user via an operation button (not illustrated) and, the controller 90 may cause the voltage applicator 26 to apply a voltage to the gap between the first electrode 22 and the second electrode 24 and apply a voltage to the gap between the first electrode 22 and the third electrode 25.

As illustrated in Fig. 7, the influenza viruses 1 in the gas introduced into the inside of the fine-particle sampling device 10 by a flow (refer to the arrows A in Fig. 7) of air are first electrically charged positively or negatively by ions 2 that are discharged due to electric discharge of the second electrode 24 to which a high voltage has been applied. Here, a case where the influenza viruses 1 are electrically charged positively will be described. The influenza viruses 1 in an electrified (electrically charged) state are caused to move as indicated by a track 3 by an electric field formed between the second electrode 24 and the first electrode 22 and an electric field formed between the third electrode 25 and the first electrode 22 (refer to the arrows E in Fig. 7), and are collected on the inner surface 66 of the first electrode 22. As described above, the influenza viruses 1 adhere to the inner surface 66 of the first electrode 22 and are collected on the inner surface 66.

Referring back to Fig. 6, next, the driver 32 rotates the first electrode 22 around the axis B (driving step) (step S3). For example, on the basis of a measurement result obtained by the in-gas concentration sensor 36, the controller 90 causes the driver 32 to rotate the first electrode 22. For example, the controller 90 may receive an instruction from a user via an operation button (not illustrated), and the controller 90 may cause the driver 32 to rotate the first electrode 22.

As illustrated in Fig. 7, the first electrode 22 rotates around the axis B in a state in which the liquid 68 is stored at a portion of the inner surface 66 in the direction around the axis B of the body 56 of the first electrode 22. In other words, the first electrode 22 rotates around the axis B in a state in which the liquid 68 is stored below the axis B such that the liquid 68 does not flow out to the outside of the body 56. Consequently, a portion of the inner surface 66 of the first electrode 22 located vertically below the axis B comes into contact with the stored liquid 68 sequentially.

The influenza viruses 1 collected on the inner surface 66 are retrieved, at optional timing, into the liquid 68 stored inside the body 56 of the first electrode 22. Specifically, the influenza viruses 1 adhering to the inner surface 66 of the body 56 of the first electrode 22 separate from the inner surface 66 and are retrieved in the liquid 68 by coming into contact with the stored liquid 68. By the movement (rotation) of the first electrode 22 that is rotated by the motor 88 and the gear 86, the entirety of the inner surface 66 of the first electrode 22 can be washed by the accumulated (stored) liquid 68.

The first electrode 22 may be previously rotated around the axis B before a voltage is applied to each of the gap between the first electrode 22 and the second electrode 24 and the gap between the first electrode 22 and the third electrode 25, and a voltage may be applied to each of the gap between the first electrode 22 and the second electrode 24 and the gap between the first electrode 22 and the third electrode 25 in a state in which the first electrode 22 has been rotated around the axis B.

Referring back to Fig. 6, last, the retriever 30 retrieves the stored liquid 68 (retrieving step) (step S4). For example, the liquid 68 can be retrieved by the retriever 30 (tank 82) through the extractor 84 at optional timing after the first electrode 22 is rotated for a certain period of time. Consequently, a liquid sample (the liquid 68) containing the influenza viruses 1 separated from the gas can be obtained. The controller 90 may cause the retriever 30 to retrieve the liquid 68 stored inside the body 56 of the first electrode 22, for example, on the basis of a measurement result obtained by the in-liquid concentration sensor 38. For example, the controller 90 may receive an instruction from a user via an operation button (not illustrated), and the controller 90 may cause the retriever 30 to retrieve the liquid 68 stored inside the body 56 of the first electrode 22.

By using the air velocity sensor 34, the in-gas concentration sensor 36, and the in-liquid concentration sensor 38 to sample fine particles, it is possible to perform sampling more appropriately and more efficiently. It is possible to obtain information on the volume of processed air by combining information on operation time with air velocity information obtained by the air velocity sensor 34 and information on the area of a place of measurement by the air velocity sensor 34. From the in-gas concentration sensor 36, information on the concentration of fine particles contained in sucked air can be obtained. From the in-liquid concentration sensor 38, information on the concentration of fine particles in the stored liquid 68 can be obtained. By using these sensors, the length of period of time in which the fine-particle sampling device 10 performs sampling of fine particles, timing of starting an operation of sampling of fine particles by the fine-particle sampling device 10, and timing of stopping the operation of sampling of the fine particles by the fine-particle sampling device 10 can be set to conditions desired by a user. Examples of conditions are "start an operation since air in which particles concentration is 10000 particles/cm³ flows in", "stop an operation since air of 1m³ has been processed", "stop an operation since 1000 particles/mL is achieved", and the like, and optimum sampling in accordance with a purpose of sampling can be selected.

By adding a function of, when a high voltage is applied, reading an electric current at the same time, it is possible to suppress excessive supply of the liquid 68 and possible to suppress depletion of the liquid 68. Specifically, an electric current value measured by the ammeter 40 is read, and, when the electric current value exceeds a predetermined threshold value, the controller 90 causes the supplier 28 to supply a minimum necessary amount of the liquid 68 to the inside of the body 56 of the first electrode 22. Consequently, the concentration of fine particles in the stored liquid 68 can be maintained as high as possible.

As described above, the fine-particle sampling device 10 according to the present embodiment is capable of retrieving the influenza viruses 1 from air into the liquid 68 such that the concentration of the influenza viruses 1 is high. By combining pieces of information obtained from various sensors, it is possible to perform sampling efficiently and possible to perform sampling under optimum conditions in accordance with use purpose of a user.

The fine-particle sampling device 10 may retrieve aerosol containing influenza viruses from air into the liquid 68 with the aerosol classified into two types of particle size ranges. Consequently, an amount of influenza viruses in each of the particle size ranges can be analyzed.

The fine-particle sampling device 10 is capable of accumulating, without circulating the liquid 68, fine particles in the liquid 68 stored inside the first electrode 22. Therefore, it is easy to retrieve fine particles such that the concentration of the fine particles is high in the liquid 68. The fine-particle sampling device 10 does not require an instrument or the like that circulates the liquid 68 and is a device in which downsizing and energy saving are easily achieved.

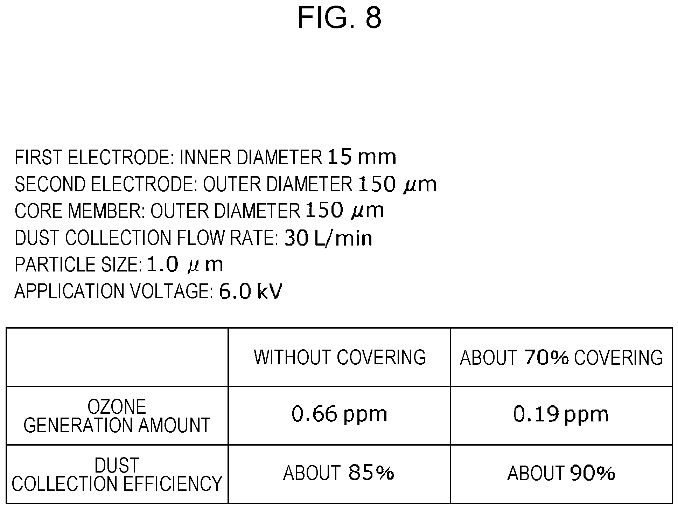

Fig. 8 is a table indicating test results of tests performed to confirm ozone generation amounts and dust collection efficiency with and without the covering member 102. The test results indicated in Fig. 8 are results of tests in each of which dust collection was performed using the first electrode 22 having an inner diameter of 15 mm, the second electrode 24 having an outer diameter of 150 µm, the core member 100, and the covering member 102 having an outer diameter of 2.6 mm under conditions in which the dust collection flow rate was 30 L/min, the target particle size was 1 µm, and the application voltage was 6 kV. A gas was caused to flow into the first electrode 22 from the side of the one end portion (end portion on the side of the first flange member 18) of the first electrode 22. In the case with the covering member 102, about 70% (that is, about 70% of I1 + 12) of a linear member constituting the second electrode 24 and the core member 100 was covered by the covering member 102.

As illustrated in Fig. 8, the ozone generation amount was 0.66 ppm in the case where covering was not performed, in other words, without the covering member 102, and the ozone generation amount was 0.19 ppm in the case where about 70% was covered, in other words, with the covering member 102. By providing the covering member 102, the generation amount of ozone was suppressed.

The dust collection efficiency was about 85% in the case where covering was not performed, in other words, without the covering member 102, and the dust collection efficiency was about 90% in the case where about 70% was covered, in other words, with the covering member 102. The dust collection efficiency is, for example, a ratio of the number of target particles collected in the liquid 68 to the number of target particles in the gas that is before flowing into the first electrode 22. By providing the covering member 102, dust collection efficiency was improved.

When the thickness of the covering member 102 is increased, the gap between the covering member 102 and the first electrode 22 decreases, and intensity of an electric field between the covering member 102 and the first electrode 22 increases. Therefore, the collection efficiency is improved.

As described above, the fine-particle sampling device 10 according to the present embodiment is a fine-particle sampling device that includes the first electrode 22 that has a shape of a tube and that has a first opening located at a first end of the tube in the axial direction and a second opening located at a second end of the tube in the axial direction; the second electrode 24 that extends in the axial direction and that is disposed in the first electrode 22 to be spaced apart from the inner surface 66 of the first electrode 22; the third electrode 25 that extends in the axial direction and that is disposed in the first electrode 22 to be spaced apart from the inner surface 66, the third electrode 25 being thicker than the second electrode 24, the third electrode 25 being at a position that differs from the position of the second electrode 24 in the axial direction; the supplier 28 that supplies the liquid 68 to the inside of the first electrode 22 and causes the liquid 68 to be stored at a portion of the inner surface 66 in the direction around the axis B of the first electrode 22; the voltage applicator 26 that applies a first voltage to the gap between the first electrode 22 and the second electrode 24 and applies a second voltage to the gap between the first electrode 22 and the third electrode 25; the driver 32 that causes the first electrode 22 to rotate around the rotational axis extending in the axial direction and passing through the inside of the first electrode 22; and the retriever 30 that retrieves the stored liquid 68.

According to this, since the third electrode 25 is thicker than the second electrode 24, an electric field is not concentrated easily and electric discharge does not occur easily between the third electrode 25 and the first electrode 22 compared with between the second electrode 24 and the first electrode 22. Therefore, generation of active substances such as ozone or the like between the third electrode 25 and the first electrode 22 can be suppressed. Since the third electrode 25 is thicker than the second electrode 24, intensity of the electric field is higher between the third electrode 25 and the first electrode 22 than between the second electrode 24 and the first electrode 22. Therefore, when a gas is caused to flow into the first electrode 22 from, of two end portions of the first electrode 22, an end portion on the side close to the second electrode 24, fine particles in the gas can be easily electrified first by electric discharge between the second electrode 24 and the first electrode 22. Then, after the fine particles in the gas are electrified, the electrified fine particles can be easily caused to adhere to the inner surface 66 of the first electrode 22 by an electric field between the third electrode 25 and the first electrode 22. By, as described above, forming the third electrode 25 to be thicker than the second electrode 24 and disposing the second electrode 24 and the third electrode 25 at different locations in the axial direction of the first electrode 22, it is possible to sample fine particles efficiently while suppressing generation of active substances. The first voltage and the second voltage may have the same potential and may have different potentials.

In the fine-particle sampling device 10 according to the present embodiment, the third electrode 25 is disposed beside the second electrode 24 in the axial direction.

Consequently, it is possible to suppress an increase in the size of the fine-particle sampling device 10 in the direction orthogonal to the axial direction of the first electrode 22 and possible to sample fine particles efficiently while suppressing generation of active substances.

In the fine-particle sampling device 10 according to the present embodiment, the third electrode 25 is longer than the second electrode 24 in the first electrode 22.

Consequently, a section in which electric discharge does not easily occur and in which intensity of the electric field is high becomes longer than a section in which electric discharge easily occurs. It is thus possible to sample fine particles more efficiently while further suppressing generation of active substances.

In the fine-particle sampling device 10 according to the present embodiment, the second electrode 24 is disposed between the first opening and the first plane and is not disposed between the first plane and the second opening in the first electrode 22, the third electrode 25 is not disposed between the first opening and the first plane and is disposed between the first plane and the second opening in the first electrode 22, the second electrode 24 and the third electrode 25 are in direct contact at the first plane with each other, the distance between the first plane and the first opening is smaller than the distance between the first plane and the second opening, and the first plane is perpendicular to the axial direction.

Consequently, the second electrode 24 is disposed on the one end portion side of the center G, and it is thus possible to suppress an increase in the length of the second electrode 24 and possible to further suppress generation of active substances. Since the third electrode 25 extends from the one end portion side of the center G to the side opposite to the one end portion with respect to the other end portion, the length of the third electrode 25 can be increased on the other end portion side to be longer than the second electrode 24, and it is possible to sample fine particles more efficiently.

In the fine-particle sampling device 10 according to the present embodiment, at least part of the third electrode 25 is formed to be integral with the second electrode 24.

Consequently, it is possible to form at least part of the third electrode 25 and the second electrode 24 with a single member easily.

In the fine-particle sampling device 10 according to the present embodiment, the third electrode 25 includes the core member 100 extending in the axial direction and the covering member 102 having electrical conductivity and covering the core member 100.

Consequently, it is possible by covering the core member 100 with the covering member 102 to easily form the third electrode 25 to be thicker than the second electrode 24.

In the fine-particle sampling device 10 according to the present embodiment, the core member 100 is formed to be integral with the second electrode 24 such that the second electrode 24 and the core member 100 are continuous in the axial direction.

Consequently, it is possible to form the core member 100 and the second electrode 24 easily with a single electrically conductive member and possible to form the third electrode 25 to be thicker than the second electrode 24 easily by the covering member 102.

The fine-particle sampling device 10 according to the present embodiment further includes the air velocity sensor 34, and the controller 90 determines that a measured value obtained by the air velocity sensor 34 indicates the air velocity of the gas inside the first electrode 22.

Consequently, it is possible to measure the air velocity of a gas that passes through the inside of the first electrode 22 and thus is possible to easily determine whether a gas flows inside the first electrode 22. For example, by performing application of a voltage or the like when a gas flows inside the first electrode 22, collection of fine particles becomes easy. It is thus possible to sample the fine particles more efficiently. As described above, it is possible to adjust, in accordance with air velocity information from the air velocity sensor 34, time and timing of applying a voltage to each of the gap between the first electrode 22 and the second electrode 24 and the gap between the first electrode 22 and the third electrode 25, timing of ending voltage application, timing of starting retrieving of the liquid 68, and the like. Consequently, sampling can be easily performed at optimum and appropriate timing and operation time in accordance with intended use and purpose of the sampling.

The fine-particle sampling device 10 according to the present embodiment further includes the controller 90 that calculates the flow rate of a gas on the basis of a measurement result obtained by the air velocity sensor 34 and outputs the flow rate.

Consequently, it is possible to adjust timing of ending voltage application, timing of starting retrieving of the liquid 68, and the like on the basis of the flow rate of the gas that has passed through the inside of the first electrode 22, and possible to sample fine particles more efficiently.

The fine-particle sampling device 10 according to the present embodiment further includes the in-gas concentration sensor 36. The controller 90 determines that a measured value obtained by the in-gas concentration sensor 36 indicates the concentration of fine particles in the gas inside the first electrode 22. On the basis of a measurement result obtained by the in-gas concentration sensor 36, the controller 90 controls the voltage applicator 26 and the driver 32.

Consequently, collection of fine particles in the gas becomes easy by applying a voltage and rotating the first electrode 22 when a concentration that is higher than a predetermined concentration is measured. By thus performing an operating when a gas with a desired fine particle concentration is introduced, it is possible to sample fine particles more efficiently.

The fine-particle sampling device 10 according to the present embodiment further includes the in-liquid concentration sensor 38 that measures the concentration of fine particles in the stored liquid 68. When a concentration measured by the in-liquid concentration sensor 38 is higher than a predetermined concentration, the controller 90 causes the voltage applicator 26 to stop application of a voltage.

Consequently, it is possible by stopping application of a voltage to end sampling when fine particles are accumulated in the liquid 68 and the concentration of the fine particles in the liquid 68 becomes higher than a predetermined concentration. Therefore, it is possible to avoid sampling time unnecessarily lengthening and the concentration of fine particles in the liquid 68 becoming thin and unable to be analyzed, and it is possible to sample fine particles more efficiently.

The fine-particle sampling device 10 according to the present embodiment further includes the ammeter 40 that measures the value of the first electric current that flows between the first electrode 22 and the second electrode 24, the value of the second electric current that flows between the first electrode 22 and the third electrode 25, or the value of the third electric current based on the first electric current and the second electric current. When an electric current value measured by the ammeter 40 is larger than a predetermined value, the controller 90 causes the supplier 28 to refill the inside of the first electrode 22 with the liquid 68.

Consequently, it is possible to measure the value of the first electric current that flows between the first electrode 22 and the second electrode 24, the value of the second electric current that flows between the first electrode 22 and the third electrode 25, or the value of the third electric current based on the first electric current and the second electric current, and when the measured electric current value is larger than a predetermined value, the inside of the first electrode 22 is refilled with the liquid 68 by the supplier 28. For example, when the liquid amount of the liquid 68 decreases with a lapse of time and the electric current value becomes larger than a predetermined value, refilling of a predetermined amount of the liquid 68 can be performed. Consequently, it is possible to suppress the liquid amount of the liquid 68 stored in the first electrode 22 being excessively increased and causing a decrease in the concentration of fine particles, and possible to suppress depletion of the liquid 68. It is thus possible to sample fine particles more efficiently.

In the fine-particle sampling device 10 according to the present embodiment, a hydrophilic treatment has been performed on the inner surface 66 of the first electrode 22.

Consequently, when fine particles adhering to the inner surface 66 come into contact with the stored liquid 68, the fine particles easily separate from the inner surface 66. It is thus possible to suppress a loss in retrieving of fine particles collected on the inner surface 66 and possible to sample the fine particles more efficiently.

In the fine-particle sampling device 10 according to the present embodiment, the fixation suppressing member that suppresses fixation of fine particles is attached to the inner surface 66 of the first electrode 22.

Consequently, when fine particles adhering to the inner surface 66 come into contact with the stored liquid 68, the fine particles easily separate from the inner surface 66. It is thus possible to suppress a loss in retrieving of fine particles collected on the inner surface 66 and possible to sample the fine particles more efficiently.

In the fine-particle sampling device 10 according to the present embodiment, the liquid 68 is a liquid for analysis of fine particles in the liquid.

Consequently, it is possible to extract a target substance or the like contained in fine particles. It is possible by selecting the liquid 68 that is appropriate for each purpose and/or intended use to perform an appropriate detection protocol and/or, for example, prevent damage to samples.

### (Second Embodiment)

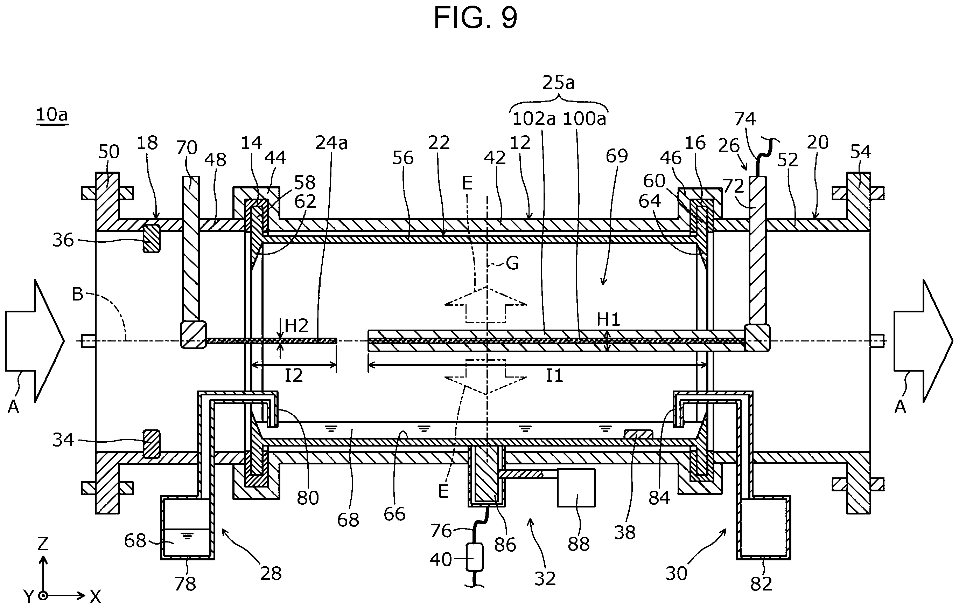

Fig. 9 is a sectional view of a fine-particle sampling device 10a according to a second embodiment. With reference to Fig. 9, the fine-particle sampling device 10a according to the second embodiment will be described.

As illustrated in Fig. 9, the fine-particle sampling device 10a includes a second electrode 24a and a third electrode 25a. The fine-particle sampling device 10a differs from the fine-particle sampling device 10 mainly in terms of that the third electrode 25a is separate from the second electrode 24a.

The third electrode 25a includes a core member 100a that extends in the axial direction of the first electrode 22 and a covering member 102a that has electrical conductivity and that covers the core member 100a. The core member 100a and the covering member 102a are separate from the second electrode 24a. The third electrode 25a is spaced apart from the second electrode 24a in the axial direction of the first electrode 22. The first electric wire 74 may be electrically connected (not illustrated) through the first support body 70 to the second electrode 24a.

When the second electrode 24a and the third electrode 25a are away from each other, the ammeter 40 is, for example, disposed at a location where the ammeter 40 is capable of measuring the electric current value of an electric current that flows between the first electrode 22 and the second electrode 24a, and the ammeter 40 measures the electric current value of the electric current that flows between the first electrode 22 and the second electrode 24a.

For example, the third electrode 25a may be in contact with the second electrode 24a. For example, the third electrode 25a is not necessarily disposed beside the second electrode 24a in the axial direction of the first electrode 22. In other words, for example, the third electrode 25a may be disposed at a position at which the third electrode 25a does not overlap the second electrode 24a when viewed in the axial direction of the first electrode 22.

### (Third Embodiment)

Fig. 10 is a sectional view of a fine-particle sampling device 10b according to a third embodiment. With reference to Fig. 10, the fine-particle sampling device 10b according to the third embodiment will be described.

As illustrated in Fig. 10, the fine-particle sampling device 10b includes a second electrode 24b and a third electrode 25b. The fine-particle sampling device 10b differs from the fine-particle sampling device 10 mainly in terms of that the third electrode 25b does not include the covering member 102 and the third electrode 25b is constituted by a single electrically conductive member that is thicker than the second electrode 24b.

The third electrode 25b is formed to be integral with the second electrode 24b. For example, by shaving one end portion side of a rod-like electrically conductive member, it is possible to integrally form the second electrode 24b and the third electrode 25b with a single electrically conductive member.

For example, the third electrode 25b may be separate from the second electrode 24b and may be spaced apart from the second electrode 24b.

### (Other Embodiments)

In the above-described embodiments, the third electrode 25 that is longer than the second electrode 24 in the first electrode 22 has been described. The third electrode 25 is, however, not limited thereto. For example, the third electrode may be shorter than the second electrode in the first electrode.

In the above-described embodiments, the second electrode 24 that is disposed, between on the one end portion side of the first electrode 22 with respect to the center G in the axial direction of the first electrode 22 and on the other end portion side of the first electrode 22 with respect to the center G in the first electrode 22, on the one end portion side with respect to the center G has been described. The second electrode 24 is, however, not limited thereto. For example, the second electrode may be disposed in the first electrode to extend from the one end portion side of the first electrode with respect to the center of the first electrode in the axial direction to the other end portion side of the first electrode with respect to the center.

In the above-described embodiments, the third electrode 25 that extends from the one end portion side of the first electrode 22 with respect to the center G of the first electrode 22 in the axial direction to the side opposite to the one end portion with respect to the other end portion of the first electrode 22 has been described. The third electrode 25 is, however, not limited thereto. For example, the third electrode may be disposed, in the first electrode, on the other end portion side of the first electrode with respect to the center of the first electrode in the axial direction.

In the above-described embodiments, the core member 100 that has a thickness substantially the same as the thickness of the second electrode 24 has been described. The core member 100 is, however, not limited thereto. For example, the core member may be thicker than the second electrode and may be thinner than the second electrode. For example, it is sufficient, when the core member is thinner than the second electrode, to form the third electrode to be thicker than the second electrode by covering the core member with a covering member.

In the above-described embodiments, the fine-particle sampling device 10 that includes the second electrode 24 and the third electrode 25 has been described. The fine-particle sampling device 10 is, however, not limited thereto. For example, the fine-particle sampling device may include second electrodes and third electrodes. In this case, for example, the second electrodes and the third electrodes may be alternately disposed in the axial direction of the first electrode.

In the above-described embodiments, the body 56 of the first electrode 22 having a cylindrical shape has been described. The body 56 of the first electrode 22 is, however, not limited thereto. For example, the body of the first electrode may be an elliptic cylinder, a polygonal cylinder, or the like.

In the above-described embodiments, the first electrode 22 that is installed in an orientation in which the axis B of the body 56 is parallel to the horizontal direction has been described. The first electrode 22 is, however, not limited thereto. The first electrode 22 is not necessarily installed in the orientation in which the axis B of the body 56 is parallel to the horizontal direction. For example, the first electrode 22 may be installed in an orientation in which the axis B of the body 56 is inclined with respect to the horizontal direction as long as the first electrode 22 is capable of storing the liquid 68 at a portion of the inner surface 66 in the direction around the axis B of the body 56 such that the liquid 68 does not flow out to the outside of the body 56. In other words, it is sufficient for the first electrode 22 to be disposed in an orientation in which the first electrode 22 can store the liquid 68 on the inner surface 66.

In the above-described embodiments, the second electrode 24 that is installed in an orientation in which the axis of the second electrode 24 coincides with the axis B of the body 56 of the first electrode 22 has been described. The second electrode 24 is, however, not limited thereto. The second electrode 24 is not necessarily installed in the orientation in which the axis of the second electrode 24 coincides with the axis B of the body 56 of the first electrode 22. For example, the second electrode 24 may be installed in an orientation in which the axis of the second electrode 24 is inclined with respect to the axis B of the body 56 as long as the second electrode 24 at least extends in the axial direction of the body 56 of the first electrode 22. For example, the second electrode 24 may be installed in an orientation in which the axis of the second electrode 24 does not coincide with the axis B of the body 56 of the first electrode 22 and in which the axis of the second electrode 24 is parallel to the axis B of the body 56 of the first electrode 22.

In the above-described embodiments, the third electrode 25 that is installed in an orientation in which the axis of the third electrode 25 coincides with the axis B of the body 56 of the first electrode 22 has been described. The third electrode 25 is, however, not limited thereto. The third electrode 25 is not necessarily installed in the orientation in which the axis of the third electrode 25 coincides with the axis B of the body 56 of the first electrode 22. For example, the third electrode 25 may be installed in an orientation in which the axis of the third electrode 25 is inclined with respect to the axis B of the body 56 as long as the third electrode 25 at least extends in the axial direction of the body 56 of the first electrode 22. For example, the third electrode 25 may be installed in an orientation in which the axis of the third electrode 25 does not coincide with the axis B of the body 56 of the first electrode 22 and in which the axis of the third electrode 25 is parallel to the axis B of the body 56 of the first electrode 22.

In the above-described embodiments, the second electrode 24 that has a linear shape has been described. The second electrode 24 is, however, not limited thereto. For example, the second electrode may have a plate-like shape, a needle-like shape, or the like.

In the above-described embodiments, the core member 100 that has a linear shape has been described. The core member 100 is, however, not limited thereto. For example, the core member may have a plate-like shape, a needle-like shape, or the like.

In the above-described embodiments, the second electrode 24 that projects outward from the one end portion of the body 56 has been described. The second electrode 24 is, however, not limited thereto. For example, the second electrode does not necessarily project outward from the first electrode.

In the above-described embodiments, the third electrode 25 that projects outward from the other end portion of the body 56 has been described. The third electrode 25 is, however, not limited thereto. For example, the third electrode does not necessarily project outward from the first electrode.

In the above-described embodiments, the driver 32 that causes the first electrode 22 to rotate around the axis B of the body 56 of the first electrode 22 has been described. The driver 32 is, however, not limited thereto. For example, the driver may cause the first electrode to rotate around a rotational axis that is slightly inclined with respect to the axis of the body of the first electrode. The driver may cause the first electrode to rotate around a rotational axis that is parallel to the axis of the body of the first electrode. It is sufficient for the driver to cause the first electrode to rotate around a rotational axis that extends in the axial direction of the first electrode and that passes through the inside of the first electrode.

### Industrial Applicability

The present disclosure is widely usable for devices that sample fine particles of aerosol and the like from a gas, such as air.

### Reference Signs List

- 10, 10a, 10b: fine-particle sampling device
- 12: duct
- 14: first bearing seal
- 16: second bearing seal
- 18: first flange member
- 20: second flange member
- 22: first electrode
- 24, 24a, 24b: second electrode
- 25, 25a, 25b: third electrode
- 26: voltage applicator
- 28: supplier
- 30: retriever
- 32: driver
- 34: air velocity sensor
- 36: in-gas concentration sensor
- 38: in-liquid concentration sensor
- 40: ammeter
- 42, 48, 52, 56: body
- 44: first support
- 46: second support
- 50, 54: flange
- 58: first outer flange
- 60: second outer flange
- 62: first inner flange
- 64: second inner flange
- 66: inner surface
- 68: liquid
- 69: space
- 70: first support body
- 72: second support body
- 74: first electric wire
- 76: second electric wire
- 78: tank
- 80: injector
- 82: tank
- 84: extractor
- 86: gear
- 88: motor
- 90: controller
- 100, 100a: core member
- 102, 102a: covering member

## Claims

1. A fine-particle sampling device comprising:
a first electrode that has a shape of a tube and has a first opening located at a first end of the tube in an axial direction and a second opening located at a second end of the tube in the axial direction;
a second electrode that extends in the axial direction and that is disposed in an inside of the first electrode to be spaced apart from an inner surface of the first electrode;
a third electrode that extends in the axial direction and that is disposed in the inside of the first electrode to be spaced apart from the inner surface, the third electrode being thicker than the second electrode, the third electrode being at a position that differs from a position of the second electrode in the axial direction;
a supplier that supplies a liquid to the inside of the first electrode and causes the liquid to be stored at a portion of the inner surface in a direction around an axis of the first electrode;
a voltage applicator that applies a first voltage to a gap between the first electrode and the second electrode and a second voltage to a gap between the first electrode and the third electrode;
a driver that causes the first electrode to rotate around a rotational axis extending in the axial direction and passing through the inside of the first electrode; and
a retriever that retrieves the liquid that is stored.

2. The fine-particle sampling device according to claim 1,
wherein the third electrode is disposed beside the second electrode in the axial direction.

3. The fine-particle sampling device according to claim 1 or 2,
wherein, in the inside of the first electrode, the third electrode is longer than the second electrode.

4. The fine-particle sampling device according to claim 3,
wherein, in the inside of the first electrode, the second electrode is disposed between the first opening and a first plane and is not disposed between the first plane and the second opening,
wherein, in the inside of the first electrode, the third electrode is not disposed between the first opening and the first plane and is disposed between the first plane and the second opening,
wherein the second electrode and the third electrode are in direct contact at the first plane with each other,
wherein a distance between the first plane and the first opening is smaller than a distance between the first plane and the second opening, and
wherein the first plane is perpendicular to the axial direction.

5. The fine-particle sampling device according to any one of claims 1 to 4,
wherein at least part of the third electrode is formed to be integral with the second electrode.

6. The fine-particle sampling device according to any one of claims 1 to 5,
wherein the third electrode includes a core member that extends in the axial direction and a covering member that has electrical conductivity and that covers the core member.

7. The fine-particle sampling device according to claim 6,
wherein the core member is formed to be integral with the second electrode such that the second electrode and the core member are continuous in the axial direction.

8. The fine-particle sampling device according to any one of claims 1 to 7, further comprising:
an air velocity sensor,
wherein the controller determines that a measured value obtained by the air velocity sensor indicates an air velocity of a gas in the inside of the first electrode.

9. The fine-particle sampling device according to claim 8, further comprising:
a controller that calculates a flow rate of the gas based on a measurement result obtained by the air velocity sensor and that outputs the flow rate.

10. The fine-particle sampling device according to claim 9, further comprising:
an in-gas concentration sensor, the controller determining that a measured value obtained by the in-gas concentration sensor indicates a concentration of fine particles in a gas in the inside of the first electrode,
wherein, based on a measurement result obtained by the in-gas concentration sensor, the controller controls the voltage applicator and the driver.

11. The fine-particle sampling device according to claim 9 or 10, further comprising:
an in-liquid concentration sensor that measures a concentration of fine particles in the liquid that is stored,
wherein, when a concentration measured by the in-liquid concentration sensor is higher than a predetermined concentration, the controller causes the voltage applicator to stop application of a voltage.

12. The fine-particle sampling device according to any one of claims 9 to 11, further comprising:
an ammeter that measures a value of a first electric current that flows between the first electrode and the second electrode, a value of a second electric current that flows between the first electrode and the third electrode, or a value of a third electric current based on the first electric current and the second electric current,
wherein, when an electric current value measured by the ammeter is larger than a predetermined value, the controller causes the supplier to refill the inside of the first electrode with the liquid.

13. The fine-particle sampling device according to any one of claims 1 to 12,
wherein a hydrophilic treatment has been performed on the inner surface of the first electrode.

14. The fine-particle sampling device according to any one of claims 1 to 13,
wherein a fixation suppressing member that suppresses fixation of fine particles is attached to the inner surface of the first electrode.

15. The fine-particle sampling device according to any one of claims 1 to 14,
wherein the liquid is a liquid for analysis of fine particles in the liquid.

16. A fine-particle sampling method for a fine-particle sampling device,
the fine-particle sampling device comprising
a first electrode that has a shape of a tube and that has a first opening located at a first end of the tube in an axial direction and a second opening located at a second end of the tube in the axial direction,
a second electrode that extends in the axial direction and that is disposed in an inside of the first electrode to be spaced apart from an inner surface of the first electrode, and
a third electrode that extends in the axial direction and that is disposed in the inside of the first electrode to be spaced apart from the inner surface,
the third electrode being thicker than the second electrode, the third electrode being at a position that differs from a position of the second electrode in the axial direction,
the fine-particle sampling method comprising:
supplying a liquid to the inside of the first electrode and causing the liquid to be stored at a portion of the inner surface in a direction around an axis of the first electrode;
applying a first voltage to a gap between the first electrode and the second electrode and a second voltage to a gap between the first electrode and the third electrode;
causing the first electrode to rotate around a rotational axis that extends in the axial direction and that passes through the inside of the first electrode; and
retrieving the liquid that is stored.
